# EUROPEAN PATENT APPLICATION

(11) **EP 4 841 582 A1**
(43) Date of publication of application: **18.11.2026**
(21) Application number: 26178632.1
(22) Date of filing: 13.05.2026
(51) Int. Cl.: G06V 10/776, G06V 10/764, G06V 10/82

(54) **METHOD AND SYSTEM FOR RESILIENCY QUANTIFICATION IN LARGE LANGUAGE MODELS EVALUATION**

(30) Priority: 14.05.2025 IN 202521046554
(71) Applicant: Tata Consultancy Services Limited, Maharashtra (IN)
(72) Inventor: URLANA, Ashok, 500081 Hyderabad, Telangana (IN); CHARAKA, Vinayak Kumar, 500081 Hyderabad, Telangana (IN); GARLAPATI, Bala Mallikarjunarao, 500081 Hyderabad, Telangana (IN); SINGH, Ajeet Kumar, 382421 Gandhinagar, Gujarat (IN); VADREVU, mayukha, 500081 Hyderabad, Telangana (IN); GUGGILLA, Shiva Kumar, 500081 Hyderabad, Telangana (IN); RATNALA, Bharat, 500081 Hyderabad, Telangana (IN); SANKEPALLY, Srividhya, 500081 Hyderabad, Telangana (IN); GUNTURI, Sitarama Brahmam, 500081 Hyderabad, Telangana (IN)
(74) Representative: Goddar, Heinz J.

(57) **Abstract**

The present disclosure performs Large Language Models (LLMs) classification prediction by utilizing non-target class probabilities along with the target class probabilities, where the conventional methods failed to utilize. Initially, the present disclosure receives a plurality of adversarial input images associated with an actual image and generates a plurality of adversarial classification probabilities. Further, a target class average probability pertaining to each of the plurality of adversarial input images are calculated. Furthermore, a non-target class average probability pertaining to each of the plurality of adversarial input images are calculated. A difference value between the target class average probability and the non-target class average probability is computed and a dynamic weight pertaining to each of the plurality of adversarial input images is computed by normalizing the difference value into a predefined scale. Further, resiliency score of the LLM is computed based on the accuracy value and an associated plurality of dynamic weights.

## Description

### CROSS-REFERENCE TO RELATED APPLICATIONS AND PRIORITY

The present application claims priority to Indian application no. 202521046554, filed on May 14, 2025.

### TECHNICAL FIELD

The disclosure herein generally relates to the field of machine learning and, more particularly, to a method and system for resiliency quantification in large language models evaluation.

### BACKGROUND

The Large Language Models (LLMs) exhibit exceptional performance across various tasks including generation and evaluation tasks. Recently, LLMs have been widely adapted to evaluate the performance of many models. However, the bottleneck of using LLMs for the evaluation task is calibrating the LLMs' resiliency. The resiliency of a model is defined as its ability to withstand attacks and identify image/text with perturbation as adversarial examples. If a model is considered highly resilient for a particular task, it should demonstrate strong generalization performance across different domains. This resiliency should be evident regardless of its performance on a specific evaluation metric such as accuracy and F1-Score on any single domain. In other words, the model's robustness is reflected in its ability to maintain consistent performance across diverse settings, rather than excelling only in isolated scenarios. For example, considering a sentiment analysis model trained on movie review dataset, if the model is resilient, it should also perform reasonably well when applied to product reviews, media posts or news articles as well. If the model obtains high accuracy with high confidence, then only that the model is highly resilient for a specific evaluation task.

A highly resilient model provides higher accuracy in terms of performance along with higher confidence. Moreover, the highly resilient model exhibits exceptional performance across the domains (out of the domain data) and is generalizable to any other domains. However, it is often observed that many LLMs demonstrate higher accuracy despite struggling to withstand adversarial attacks. Currently, there is a lack of research offering a mechanism to quantify the resilience of LLMs when used in evaluation tasks.

### SUMMARY

Embodiments of the present disclosure present technological improvements as solutions to one or more of the above-mentioned technical problems recognized by the inventors in conventional systems. For example, in one embodiment, a method for resiliency quantification in large language models evaluation is provided. The method includes receiving, by one or more hardware processors, a plurality of adversarial input images associated with an actual image, wherein the plurality of adversarial input images are generated based on the actual image using a perturbation technique. Further, the method includes generating, by the one or more hardware processors, a plurality of adversarial classification probabilities pertaining to each of the plurality of adversarial input images by a Large Language Model (LLM) associated with resiliency computation, wherein the LLM classifies each of a plurality of adversarial input images into one or more target classes. Furthermore, the method includes calculating, by the one or more hardware processors, a target class average probability pertaining to each of the plurality of adversarial input images based on an associated plurality of adversarial classification probabilities associated with the one or more target classes. Furthermore, the method includes calculating, by the one or more hardware processors, a non-target class average probability pertaining to each of the plurality of adversarial input images based on the associated plurality of adversarial classification probabilities associated with a plurality of non-target classes. Furthermore, the method includes calculating, by the one or more hardware processors, a difference value between the target class average probability and the non-target class average probability pertaining to each of the plurality of adversarial input images. Furthermore, the method includes computing, by the one or more hardware processors, a dynamic weight pertaining to each of the plurality of adversarial input images by normalizing the difference value into a predefined scale. Furthermore, the method includes computing, by the one or more hardware processors, an accuracy value of the LLM associated with resiliency computation based on a number of correctly identified images and a total number of images. Finally, the method includes computing, by the one or more hardware processors, the resiliency score of the LLM associated with resiliency computation based on the accuracy value and an associated plurality of dynamic weights.

In another aspect, a system for resiliency quantification in large language models evaluation is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a plurality of adversarial input images associated with an actual image, wherein the plurality of adversarial input images are generated based on the actual image using a perturbation technique. Further, the one or more hardware processors are configured by the programmed instructions to generate a plurality of adversarial classification probabilities pertaining to each of the plurality of adversarial input images by a Large Language Model (LLM) associated with resiliency computation, wherein the LLM classifies each of a plurality of adversarial input images into one or more target classes. Furthermore, the one or more hardware processors are configured by the programmed instructions to calculate a target class average probability pertaining to each of the plurality of adversarial input images based on an associated plurality of adversarial classification probabilities associated with the one or more target classes. Furthermore, the one or more hardware processors are configured by the programmed instructions to calculate a non-target class average probability pertaining to each of the plurality of adversarial input images based on the associated plurality of adversarial classification probabilities associated with a plurality of non-target classes. Furthermore, the one or more hardware processors are configured by the programmed instructions to calculate a difference value between the target class average probability and the non-target class average probability pertaining to each of the plurality of adversarial input images. Furthermore, the one or more hardware processors are configured by the programmed instructions to compute a dynamic weight pertaining to each of the plurality of adversarial input images by normalizing the difference value into a predefined scale. Furthermore, the one or more hardware processors are configured by the programmed instructions to compute an accuracy value of the LLM associated with resiliency computation based on a number of correctly identified images and a total number of images. Finally, the one or more hardware processors are configured by the programmed instructions to compute the resiliency score of the LLM associated with resiliency computation based on the accuracy value and an associated plurality of dynamic weights.

In yet another aspect, a computer program product including a non-transitory computer-readable medium embodied therein a computer program for resiliency quantification in large language models evaluation is provided. The computer readable program, when executed on a computing device, causes the computing device to receive a plurality of adversarial input images associated with an actual image, wherein the plurality of adversarial input images are generated based on the actual image using a perturbation technique. Further, the computer readable program, when executed on a computing device, causes the computing device to generate a plurality of adversarial classification probabilities pertaining to each of the plurality of adversarial input images by a Large Language Model (LLM) associated with resiliency computation, wherein the LLM classifies each of a plurality of adversarial input images into one or more target classes. Furthermore, the computer readable program, when executed on a computing device, causes the computing device to calculate a target class average probability pertaining to each of the plurality of adversarial input images based on an associated plurality of adversarial classification probabilities associated with the one or more target classes. Furthermore, the computer readable program, when executed on a computing device, causes the computing device to calculate a non-target class average probability pertaining to each of the plurality of adversarial input images based on the associated plurality of adversarial classification probabilities associated with a plurality of non-target classes. Furthermore, the computer readable program, when executed on a computing device, causes the computing device to calculate a difference value between the target class average probability and the non-target class average probability pertaining to each of the plurality of adversarial input images. Furthermore, the computer readable program, when executed on a computing device, causes the computing device to compute a dynamic weight pertaining to each of the plurality of adversarial input images by normalizing the difference value into a predefined scale. Furthermore, the computer readable program, when executed on a computing device, causes the computing device to compute an accuracy value of the LLM associated with resiliency computation based on a number of correctly identified images and a total number of images. Finally, the computer readable program, when executed on a computing device, causes the computing device to compute the resiliency score of the LLM associated with resiliency computation based on the accuracy value and an associated plurality of dynamic weights.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for resiliency quantification in large language models evaluation, in accordance with some embodiments of the present disclosure.
FIG. 1B is an example modular block diagram of the system for resiliency quantification in large language models evaluation, in accordance with some embodiments of the present disclosure.
FIGS. 2A and 2B (collectively referred to as FIG. 2) illustrates a flow diagram for a processor implemented method for resiliency quantification in large language models evaluation, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In image classification tasks performed by Machine Learning (ML) models, the aim is to classify the given image of an animal into one of a plurality of classes, (such as dog, cat, etc.,). Whenever Large Language Models (LLMs) are used for the classification tasks, there are two major evaluation criteria to understand how robust the LLM is in performing the respective image classification tasks. The two major evaluation criteria are (i) Performance metric (Accuracy, F1-Score) and (ii) Quantifying Resiliency.

The performance metric is a popular approach, whereas to measure the resiliency of a model, the conventional methods obtain the adversarial images by applying some adversarial techniques on the original images. In general, the adversarial techniques perform some form of perturbation on the images to convert the original images into adversarial images. Some of the popular adversarial techniques for images are adding subtle changes or noise. In the case of conventional approaches, the resiliency of the model is obtained by finding the ratio of the number of correctly labeled images out of the total number of adversarial images.

In simple terms, softmax probability is a method used by classifiers (like a neural network) to convert its raw outputs (often called logits) into probabilities before making a final prediction. Generally, a classifier that is trying to figure out which of several categories (like dog, cat, or bird) an image belongs to. The classifier gives a "score" (logit) for each category. These scores aren't probabilities yet, they're just raw numbers that tell how strongly the model thinks each category is the right one.

The softmax function then takes these raw scores and converts them into probabilities. It turns each score into a number between 0 and 1, and all the probabilities will add up to 1. Further, the category with the highest probability will be chosen as the model's final prediction. Here, the probabilities of only target class is used for prediction.

For example: Considering the scores for categories = {Dog = 2.0, Cat = 1.0, Bird = 0.5}, the softmax function converts these into probabilities like: Dog: 0.65 (65% chance), Cat: 0.25 (25% chance) and Bird: 0.10 (10% chance). The ML model will then predict dog as the most likely category because they have the highest probability (0.65). Softmax normalizes scores into a probability distribution, making it easier to interpret which class the model is most confident in.

However, the conventional approach ignores the probability values of the non-target class labels. Further, the resiliency score of conventional methods is similar to the calculation of an accuracy score, which is not generalizable to out-of-domain data samples.

To address the above said challenges, embodiments herein provide a method and system for resiliency quantification in LLMs evaluation. The present disclosure utilizes a resiliency calculation method to measure how resilient a particular LLM is in performing a classification task. The present disclosure utilizes data and a model for resiliency computation. Here, the data can be either text, image, or any other, the model is any LLM that is used for the classification task. The resiliency test provides the resiliency score to define the overall confidence of the classifier prediction. Further, the present disclosure introduces attacks on the image/text data and verifies the model's ability to withstand the attack by measuring the resiliency score. An attack in image/text data means addition or deletion of a few features present in the original input. For example, an attack for a text input is removing or adding of few words in the given sentence, whereas in case of image, attack means addition of noise to the original image. Further, the present disclosure computes a dynamic weight for each attack technique and at the end it combines all of them to obtain the cumulative resiliency score of the LLM mode by attacking with various attack techniques.

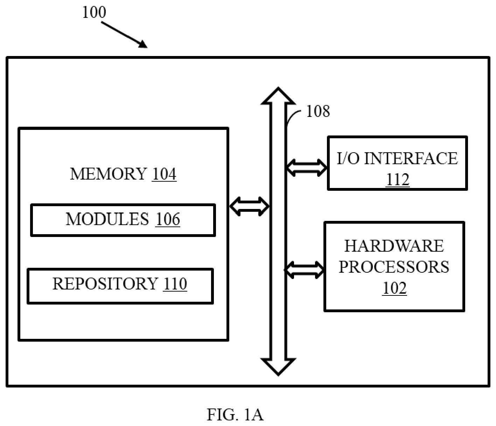

Referring now to the drawings, more particularly to FIG. 1A through FIG. 2B, where similar reference characters denote corresponding features consistently throughout the figures, there are shown preferred embodiments, and these embodiments are described in the context of the following exemplary system and/or method.

FIG. 1A is a functional block diagram of a system 100 for resiliency quantification in large language models evaluation, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Resiliency quantification in large language models evaluation. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for resiliency quantification in large language models evaluation.

The data repository (or repository) 110 may include a plurality of abstracted pieces of code for refinement and data that is processed, received, or generated as a result of the execution of the plurality of modules in the module(s) 106.

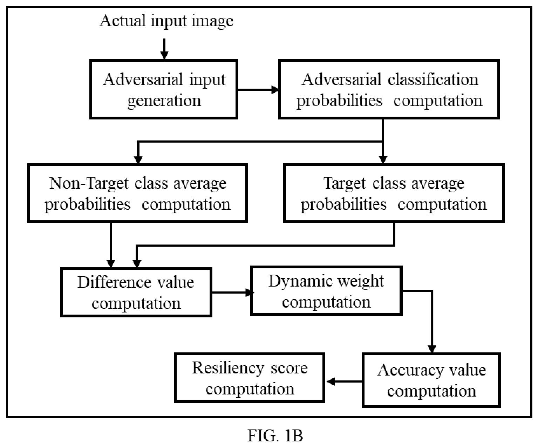

Although the data repository 110 is shown internal to the system 100, it will be noted that, in alternate embodiments, the data repository 110 can also be implemented externally to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS). FIG. 1B is an example modular block diagram of the system for resiliency quantification in large language models evaluation, in accordance with some embodiments of the present disclosure.

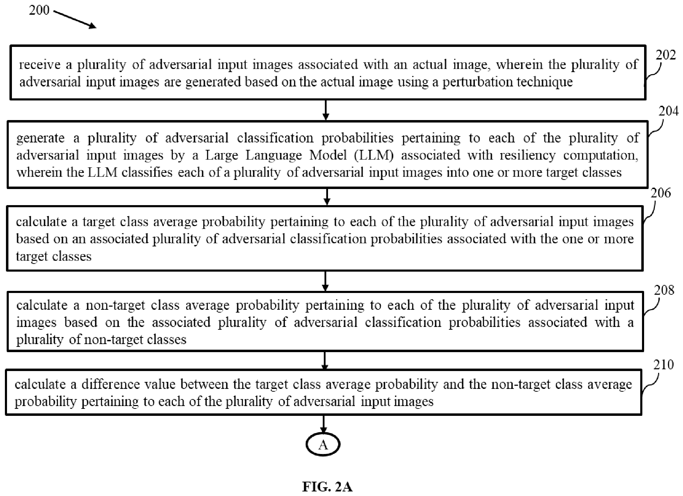

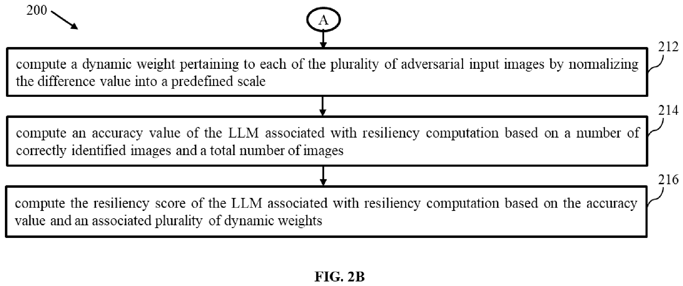

The working of the components of system 100 are explained with reference to the method steps depicted in FIG. 2, which is an exemplary flow diagram illustrating a method 200 for resiliency quantification in large language models evaluation implemented by the system of FIG. 1A and FIG. 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and FIG. 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented with any suitable hardware, software, firmware, or combination thereof.

Now referring to FIG. 2, at step 202 of method 200, the one or more hardware processors 102 are configured by the programmed instructions to receive a plurality of adversarial input images associated with an actual image. The plurality of adversarial input images are generated based on the actual image using a perturbation technique. For example, some of the popular perturbation techniques for images are adding subtle changes or noise.

At step 204 of the method 200, the one or more hardware processors 102 are configured by the programmed instructions to generate a plurality of adversarial classification probabilities pertaining to each of the plurality of adversarial input images by a Large Language Model (LLM) associated with resiliency computation. The LLM classifies each of a plurality of adversarial input images into one or more target classes. The plurality of adversarial input images are associated with a plurality of LLM attacks. An adversarial attack occurs when an input to a model is modified in a subtle way, specifically crafted to cause the model to make incorrect prediction without changing the human-perceived meaning or class of the input. Some example of adversarial attacks techniques on images are "fast gradient sign method" and "Deepfool". An example adversarial attacks techniques on text is "TextAttack". For example, the adversarial classification probabilities pertain to softmax probabilities.

For example, considering a multi-class (for example,10-class) image classification task and the plurality of adversarial classification probabilities of all the 10-classes are [p1, p2, p3, p4, p5, p6, p7, p8, p9, p10] and the target class is p1 for an image1. The objective is to classify each image into any one of the 10 classes. In an embodiment, each attack is labeled as "N1" and the attacked samples are called as adversarial input images.

At step 206 of the method 200, the one or more hardware processors 102 are configured by the programmed instructions to calculate a target class average probability pertaining to each of the plurality of adversarial input images based on an associated plurality of adversarial classification probabilities associated with the one or more target classes. For example, the formula to compute the target class average is given in equation (1). For example, the target class is the correct class label for a given input image. ${Tar}_{prob 1} = avg \left(p1\right)$ (1)

At step 208 of the method 200 the one or more hardware processors 102 is configured by the programmed instructions to calculate a non-target class average probability (*p*2*,* p3, p4, p5, *p*6*, p*7*,* p8, *p*9*, p*10) pertaining to each of the plurality of adversarial input images based on the associated plurality of adversarial classification probabilities associated with the plurality of non-target classes. For example, the non-target classes are all the other possible class labels that are not the correct label for a given input. ${NonTar}_{prob 1} = avg \left(p1,p2,p3,p4,p5,p6,p7,p8,p9,p10\right)$ (2)

At step 210 of the method 200, the one or more hardware processors 102 is configured by the programmed instructions to calculate a difference value between the target class average probabilities and the non-target class probability pertaining to each of the plurality of adversarial input images using equation (3). ${Diff}_{prob 1} = {Tar}_{prob 1} - {NonTar}_{prob 1}$ (3)

At step 212 of the method 200, the one or more hardware processors 102 is configured by the programmed instructions to compute a dynamic weight pertaining to each of the plurality of adversarial input images by normalizing the difference value into a predefined scale using equation (4).

Considering the average probability of target class is 0.11 and non-target- class is 0.89. The difference between the target and non-target classes probabilities is -0.78 (0.11-0.89). The formula for normalizing in a certain range [-1, 1], where *X*ₘᵢₙ = -1 and *Xₘₐₓ =* -1. ${X}_{norm} = \left({Diff}_{prob 1}-{X}_{min}\right) / \left({X}_{max}-{X}_{min}=\left(-0.78+1\right)/2=0.11.\right.$ The normalized difference value is the dynamic weight (w1) for one adversarial technique (attacks). Similarly, a plurality of dynamic weights are computed for a plurality of adversarial techniques based on a plurality of adversarial images. ${NormDiff}_{prob 1} = normalize \left({Diff}_{prob 1}\right)$ (4)

At step 214 of the method 200, the one or more hardware processors 102 is configured by the programmed instructions to compute the accuracy value of the LLM associated with resiliency computation based on a number of correctly identified images and a total number of images using equation (5). For example, considering there are total 100 images and out of them 90 images are classified correctly, in that case the accuracy (c1) is 90/100 = 90%. Here, this accuracy is obtained with respect to first attack technique. Similarly, accuracy values can be obtained for a plurality of attacks. $Accuracy value = \frac{No of images correctly classified}{Total no of images}$ (5)

At step 216 of the method 200, the one or more hardware processors 102 is configured by the programmed instructions to compute the resiliency score of the LLM associated with resiliency computation based on the accuracy value and an associated plurality of dynamic weights using equation (6). $Resiliency of LLM = \frac{{\sum }_{k = 1}^{K} {NormDiff}_{probk} . {c}_{k}^{\left(j\right)}}{{\sum }_{k = 1}^{K} {NormDiff}_{probk}}$ (6)

Now referring to equation (6), the *w*₁, *w*₂ ..... *wₖ* denotes the dynamic weights given to each attack and *c*₁, *c*₂ ..... *cₖ* represents the corresponding accuracy values. For example, considering weights *w*₁=0.10, *w*₂=0.2, *w*₃=0.15 and accuracy values *c*₁=0.128, *c*₂=0.3, *c*₃=0.19. The resiliency of model measured as (*w*₁.*c*₁ *+ w*₂. *c*₂ + *w*₃. *c*₃)/(*w*₁ *+ w*₂ + *w*₃) as mentioned in equation (6). At the end, by using equation 6, a resiliency score of 0.22 is obtained and the corresponding accuracy of the classifier is 90%. From our experiment, it is evident that, despite the LLM exhibits high accuracy, it is not resilient enough to generalize several adversarial attacks. If the resiliency is greater than a predefined threshold, then the LLM is having good generalization in classification and, wherein if the resiliency is less than a predefined threshold the LLM is having poor generalization.

### Experimentation:

In an embodiment, the present disclosure has been experimented, and the details of experimentation are given below: For example, the task is to classify each image into one of the 10 predefined classes. Adversarial images are obtained by applying several adversarial techniques such as FGSM (Fast gradient sign method), PGD (Projected Gradient Descent) and the like, on the original/actual images. Here, the resiliency score is by measuring the cumulative weighted average of dynamic weights and accuracy scores. From the experiments, it was observed that despite obtaining 89% accuracy, the classifier obtains a resiliency score 22.5%. Often, the high resiliency score indicates higher generalizability of the classification model.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), via one or more hardware processors, a plurality of adversarial input images associated with an actual image, wherein the plurality of adversarial input images are generated based on the actual image using a perturbation technique;
generating (204), via the one or more hardware processors, a plurality of adversarial classification probabilities pertaining to each of the plurality of adversarial input images by a Large Language Model (LLM) associated with resiliency computation, wherein the LLM classifies each of a plurality of adversarial input images into one or more target classes;
calculating (206), via the one or more hardware processors, a target class average probability pertaining to each of the plurality of adversarial input images based on an associated plurality of adversarial classification probabilities associated with the one or more target classes;
calculating (208), via the one or more hardware processors, a non-target class average probability pertaining to each of the plurality of adversarial input images based on the associated plurality of adversarial classification probabilities associated with a plurality of non-target classes;
calculating (210), via the one or more hardware processors, a difference value between the target class average probability and the non-target class average probability pertaining to each of the plurality of adversarial input images;
computing (212), via the one or more hardware processors, a dynamic weight pertaining to each of the plurality of adversarial input images by normalizing the difference value into a predefined scale;
computing (214), via the one or more hardware processors, an accuracy value of the LLM associated with resiliency computation based on a number of correctly identified images and a total number of images; and
computing (216), via the one or more hardware processors, the resiliency score of the LLM associated with resiliency computation based on the accuracy value and an associated plurality of dynamic weights.

2. The method as claimed in claim 1, wherein, the target class is the correct class label for a given input, and wherein the non-target classes are all the other possible class labels that are not the correct label for a given input.

3. The method as claimed in claim 1, wherein if the dynamic weight is greater than a predefined threshold, then the LLM is having poor generalization and, wherein if the dynamic weight is less than a predefined threshold, then the LLM is having good generalization.

4. The method as claimed in claim 1, wherein the classification probabilities pertain to softmax probabilities.

5. The method as claimed in claim 1, wherein the plurality of adversarial input images are associated with a plurality of LLM attacks.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a plurality of adversarial input images associated with an actual image, wherein the plurality of adversarial input images are generated based on the actual image using a perturbation technique;
generate a plurality of adversarial classification probabilities pertaining to each of the plurality of adversarial input images by a Large Language Model (LLM) associated with resiliency computation, wherein the LLM classifies each of a plurality of adversarial input images into one or more target classes;
calculate a target class average probability pertaining to each of the plurality of adversarial input images based on an associated plurality of adversarial classification probabilities associated with the one or more target classes;
calculate a non-target class average probability pertaining to each of the plurality of adversarial input images based on the associated plurality of adversarial classification probabilities associated with a plurality of non-target classes;
calculate a difference value between the target class average probability and the non-target class average probability pertaining to each of the plurality of adversarial input images;
compute a dynamic weight pertaining to each of the plurality of adversarial input images by normalizing the difference value into a predefined scale;
compute an accuracy value of the LLM associated with resiliency computation based on a number of correctly identified images and a total number of images; and
compute the resiliency score of the LLM associated with resiliency computation based on the accuracy value and an associated plurality of dynamic weights.

7. The system as claimed in claim 6, wherein, the target class is the correct class label for a given input, and wherein the non-target classes are all the other possible class labels that are not the correct label for a given input.

8. The system as claimed in claim 6, wherein if the dynamic weight is greater than a predefined threshold, then the LLM is having poor generalization and, wherein if the dynamic weight is less than a predefined threshold, then the LLM is having good generalization.

9. The system as claimed in claim 6, wherein the classification probabilities pertain to softmax probabilities.

10. The system as claimed in claim 6, wherein the plurality of adversarial input images are associated with a plurality of LLM attacks.

11. One or more non-transitory machine-readable information storage mediums comprising one or more instructions which when executed by one or more hardware processors cause:
receiving a plurality of adversarial input images associated with an actual image, wherein the plurality of adversarial input images are generated based on the actual image using a perturbation technique;
generating a plurality of adversarial classification probabilities pertaining to each of the plurality of adversarial input images by a Large Language Model (LLM) associated with resiliency computation, wherein the LLM classifies each of a plurality of adversarial input images into one or more target classes;
calculating a target class average probability pertaining to each of the plurality of adversarial input images based on an associated plurality of adversarial classification probabilities associated with the one or more target classes;
calculating a non-target class average probability pertaining to each of the plurality of adversarial input images based on the associated plurality of adversarial classification probabilities associated with a plurality of non-target classes;
calculating a difference value between the target class average probability and the non-target class average probability pertaining to each of the plurality of adversarial input images;
computing a dynamic weight pertaining to each of the plurality of adversarial input images by normalizing the difference value into a predefined scale;
computing an accuracy value of the LLM associated with resiliency computation based on a number of correctly identified images and a total number of images; and
computing the resiliency score of the LLM associated with resiliency computation based on the accuracy value and an associated plurality of dynamic weights.

12. The one or more non-transitory machine-readable information storage mediums as claimed in claim 11, wherein, the target class is the correct class label for a given input, and wherein the non-target classes are all the other possible class labels that are not the correct label for a given input.

13. The one or more non-transitory machine-readable information storage mediums as claimed in claim 11, wherein if the dynamic weight is greater than a predefined threshold, then the LLM is having poor generalization and, wherein if the dynamic weight is less than a predefined threshold, then the LLM is having good generalization.

14. The one or more non-transitory machine-readable information storage mediums as claimed in claim 11, wherein the classification probabilities pertain to softmax probabilities.

15. The one or more non-transitory machine-readable information storage mediums as claimed in claim 11, wherein the plurality of adversarial input images are associated with a plurality of LLM attacks.
